# EUROPEAN PATENT APPLICATION

(11) **EP 4 817 421 A1**
(43) Date of publication of application: **07.10.2026**
(21) Application number: 24897189.7
(22) Date of filing: 30.10.2024
(51) Int. Cl.: A23G 1/32, A23F 5/16, A23G 1/48

(54) **COFFEE-FLAVORED CHOCOLATE COMPOSITION**

(30) Priority: 27.11.2023 JP 2023199939
(71) Applicant: Suntory Holdings Limited, Osaka-shi, Osaka 530-8203 (JP)
(72) Inventor: ITOYAMA, Akinori, Kawasaki-shi, Kanagawa 211-0067 (JP); NAKAJIMA, Makoto, Kawasaki-shi, Kanagawa 211-0067 (JP); ISHII, Tomoki, Kawasaki-shi, Kanagawa 211-0067 (JP); ASAMI, Yoji, Tokyo 135-8631 (JP)
(74) Representative: Vossius & Partner Patentanwälte Rechtsanwälte mbB
(86) International application number: PCT/JP2024/038674
(87) International publication number: WO 2025/115500

(57) **Abstract**

Provided are: a coffee-flavored chocolate composition having improved coffee flavor while also having reduced caffeine content; and a method for producing the same. The content of caffeine in the chocolate composition is adjusted to 60-750 ppm, and the total content of the kahweol palmitate and the cafestol palmitate is adjusted to 850-6800 mg/kg.

## Description

### Technical Field

The present invention relates to a coffee-flavored chocolate composition and a method for producing the coffee-flavored chocolate composition.

### Background Art

Due to diversification of preferences in recent years, chocolate having a flavor different from those of cocoa and milk has attracted attention. Although coffee-flavored chocolate is also known, at present, there are many products that mainly add coffee extract or instant coffee to cacao oil and/or fat to impart a coffee flavor.

In recent years, it has been reported that a coffee flavor can be imparted to a food such as chocolate by adding a ground product of roasted coffee beans (Patent Documents 1 and 2). However, although coffee and the like usually contain caffeine, there is a need for foods in which a caffeine content is reduced while the coffee flavor is imparted for the reason that caffeine may inhibit sound sleep or stimulate the central nerve, the heart, gastric secretion, and digestion.

However, caffeine is one of main taste components of coffee, if this is removed, an original flavor of coffee is weakened, and there is a problem that the original flavor of coffee is impaired because taste components (including fragrance components) other than caffeine are also removed in a decaffeination step.

Under such circumstances, a method for improving the flavor of caffeine-less coffee has been proposed. For example, Patent Document 3 describes that by adding one or more neutral amino acids selected from the group consisting of valine, leucine, and isoleucine, the taste reduced by a decaffeination treatment can be supplemented. Patent Document 4 describes that by adding theanine to caffeine-less coffee, the flavor of the caffeine-less coffee is improved, and an original preference of coffee is restored. However, these are all techniques for improving the taste of beverages, and are not methods for improving the coffee flavor in foods such as chocolate.

### Citation List

### Patent Documents

Patent Document 1: JP 2015-073462 A
Patent Document 2: JP 2020-089331 A
Patent Document 3: JP 2009-254307 A
Patent Document 4: JP 2004-105003 A

### Summary of Invention

### Technical Problem

An object of the present invention is to provide a coffee-flavored chocolate composition having an enhanced coffee flavor while reducing a caffeine content.

### Solution to Problem

As a result of intensive studies to solve the above problems, the present inventors have found that a finely ground product of roasted coffee beans having a reduced caffeine content is blended in a chocolate composition, and the caffeine content in the composition, a content of kahweol palmitate, and a content of cafestol palmitate are adjusted to specific ranges, thereby obtaining a coffee-flavored chocolate composition with an enhanced coffee flavor while reducing the caffeine content, and have completed the present invention.

That is, the present invention relates to the following, but is not limited thereto.
(1) A coffee-flavored chocolate composition, wherein
   a content of caffeine is from 60 to 750 ppm, and
   a total content of kahweol palmitate and cafestol palmitate is from 850 to 6800 mg/kg.
(2) The chocolate composition according to (1), wherein a ratio of the content (b: ppm) of caffeine to the total content (a: mg/kg) of kahweol palmitate and cafestol palmitate (content of caffeine/total content of kahweol palmitate and cafestol palmitate (b/a)) is 0.18 or less.
(3) The chocolate composition according to (1) or (2), wherein the content of caffeine is from 65 to 650 ppm.
(4) The chocolate composition according to any of (1) to (3), wherein the total content of kahweol palmitate and cafestol palmitate is from 1000 to 6000 mg/kg.
(5) The chocolate composition according to any of (1) to (4), wherein the content of kahweol palmitate is from 500 to 4000 mg/kg.
(6) The chocolate composition according to any of (1) to (4), wherein the content of cafestol palmitate is from 350 to 2500 mg/kg.
(7) The chocolate composition according to any of (1) to (6), containing a finely ground product of roasted coffee beans having a median diameter of from 5 to 50 µm.
(8) The chocolate composition according to (7), wherein a content of the finely ground product of roasted coffee beans in the chocolate composition is from 4 to 38 mass%.
(9) The chocolate composition according to any of (1) to (8), wherein the coffee beans contain arabica coffee beans.
(10) The chocolate composition according to any of (1) to (9), wherein the coffee beans have a degree of roast of from L16 to L32.
(11) The chocolate composition according to any of (1) to (10), wherein a content of cacao mass is less than 50 mass%.
(12) The chocolate composition according to any of (1) to (11), wherein the chocolate composition is a white chocolate.
(13) A method for producing a coffee-flavored chocolate composition, the method including:
   adjusting a content of caffeine to from 60 to 750 ppm; and
   adjusting a total content of kahweol palmitate and cafestol palmitate to from 850 to 6800 mg/kg.

### Advantageous Effects of Invention

According to the present invention, it is possible to obtain a coffee-flavored chocolate composition having an enhanced coffee flavor while reducing the content of caffeine.

### Description of Embodiments

Unless otherwise noted, "ppm" used in the present specification means ppm by weight/weight (w/w).

### 1. Coffee-flavored chocolate composition

The present invention, in one aspect, is a coffee-flavored chocolate composition having a content of caffeine of from 60 to 750 ppm, and a total content of kahweol palmitate and cafestol palmitate of from 850 to 6800 mg/kg. When the caffeine content and the total content of kahweol palmitate and cafestol palmitate are within the above range, a coffee-flavored chocolate composition having an enhanced coffee flavor can be obtained while reducing the caffeine content.

### 1-1. Chocolate composition

The chocolate composition in the present invention includes chocolates and cocoa butter alternative oil and/or fat processed food products.

In the present specification, chocolates satisfy "The Fair Competition Code Concerning Labeling for Chocolates" based on Fair Trade Commission certification, and refer to those classified into chocolate, semi-chocolate, chocolate confectionery, semi-chocolate confectionery, and the like, according to the amount of cacao mass including cocoa powder, cocoa butter, and the like, and the amount of fat, milk solid, and moisture, and the chocolates include all of them. In the present invention, the content of cacao mass contained in chocolates is not particularly limited, and is preferably less than 50 mass%, more preferably 45 mass% or less, and still more preferably 40 mass% or less. In the present invention, the content of cocoa powder and cocoa butter contained in chocolates is also not particularly limited, and is preferably less than 50 mass%, more preferably 45 mass% or less, and still more preferably 40 mass% or less.

The chocolates are classified into dark chocolate containing no dairy product, milk chocolate containing a dairy product, and white chocolate using only cocoa butter as a component derived from cacao beans, depending on the difference in raw materials. In the present invention, although the chocolates may be any of dark chocolate, milk chocolate, and white chocolate, white chocolate using cocoa butter without using cacao mass or cocoa is preferable.

In the present invention, the type of the chocolates includes, but is not limited to, hard chocolates such as plate chocolates and soft chocolates such as chocolate cream. The hard chocolate is a solid chocolate having snap properties, and specific examples thereof include plate chocolate, enrober chocolate, shell chocolate, hollow chocolate, and panned chocolate. The soft chocolate is soft chocolate having a spreading property, and is used by being applied to, for example, bread. Specific examples thereof include a chocolate spread, chocolate for filling, and a chocolate cream.

In the present specification, the cocoa butter alternative oil and/or fat processed food product is a product obtained by substituting a part or all of cocoa butter in chocolates with cocoa butter alternative oil and/or fat. The content of the cocoa butter alternative oil and/or fat contained in the cocoa butter alternative oil and/or fat processed food product is not particularly limited, and is preferably less than 50 mass%, more preferably 45 mass% or less, and still more preferably 40 mass% or less. In the present invention, the content of cacao mass contained in the cocoa butter alternative oil and/or fat processed food product is also not particularly limited, and is preferably less than 50 mass%, more preferably 45 mass% or less, and still more preferably 40 mass% or less. In the present invention, the content of cocoa powder and cocoa butter contained in the cocoa butter alternative oil and/or fat processed food product is also not particularly limited, and is preferably less than 50 mass%, more preferably 45 mass% or less, and still more preferably 40 mass% or less.

In the cocoa butter alternative oil and/or fat processed food product in the present specification, vegetable oil and/or fat and the like can be appropriately included as necessary in addition to the cocoa butter alternative oil and/or fat.

Examples of the cocoa butter alternative oil and/or fat that can be used in the present invention include CBE (Cocoa butter equivalent), CBI (Cocoa butter improver), CBR (Cocoa butter replacer), CBS (Cocoa butter substitute), and oil and/or fat for filling.

The cocoa butter alternative oil and/or fat contains triglycerides of POS and SOS at a constant ratio. "POS" means triglyceride in which oleic acid is located at the sn-2 position of triglyceride, and palmitic acid and stearic acid are located at the sn-1, 3 positions, respectively; or in which stearic acid and palmitic acid are located. "SOS" means triglyceride in which oleic acid is located at the sn-2 position of triglyceride, and stearic acid is located at the sn-1, 3 positions. By using the cocoa butter alternative oil and/or fat having different ratios of POS and SOS, it is possible to flexibly adjust hardness at room temperature, meltability in the mouth, and the like.

### 1-2. Caffeine

Caffeine is a type of alkaloid, and is also known as one of organic compounds having a structure similar to xanthine having a purine ring. It is known that caffeine is contained in coffee, green tea, oolong tea, black tea, cocoa, chocolate, and the like. The method for reducing or removing the caffeine content in the chocolate composition of the present invention is not particularly limited, and for example, coffee beans from which caffeine has been reduced or removed may be used. Examples of the method for reducing and removing caffeine include a method for removing caffeine from refined green coffee beans, a method using coffee beans from which caffeine has been removed by a breeding technique, a genetic recombination technique, and the like, a method for selectively removing caffeine by immersing the green coffee beans in a solvent such as an organic solvent, water, or supercritical fluidized carbon dioxide, and a method for adsorbing and removing caffeine from a coffee extract by activated carbon, an ion exchange resin, and the like.

In the present invention, the caffeine content in the chocolate composition may be adjusted by previously measuring the content of caffeine contained in a finely ground product of roasted coffee beans to be described later, and then blending the finely ground product such that the content of caffeine in the composition is a predetermined content. At that time, a plurality of finely ground products produced from a plurality of varieties of roasted coffee beans may be used in combination.

If necessary, caffeine isolated from a natural product, artificially synthesized caffeine, and the like can be used, and they may be combined to adjust the caffeine content in the chocolate composition.

The lower limit value of the caffeine content in the chocolate composition of the present invention is 60 ppm, preferably 65 ppm, more preferably 70 ppm. The upper limit value of the caffeine content in the chocolate composition of the present invention is 750 ppm, preferably 730 ppm, 700 ppm, 680 ppm, 650 ppm, or 630 ppm, more preferably 610 ppm. In addition, in one aspect, the upper limit value of the caffeine content in the chocolate composition of the present invention may be 580 ppm, 550 ppm, 530 ppm, 500 ppm, 480 ppm, 450 ppm, 430 ppm, or 400 ppm. Typically, a content range of caffeine in the chocolate composition of the present invention is from 60 to 750 ppm, preferably from 60 to 700 ppm or from 65 to 650 ppm, more preferably from 65 to 630 ppm, and still more preferably from 70 to 610 ppm.

The caffeine content can be measured by a known method, and can be measured by, for example, a spectroscopic method such as an HPLC method, an LC-MS method, a GC-MS method, an LC method, a GC method, or a near infrared method.

### 1-3. Contents of kahweol palmitate and cafestol palmitate

The chocolate composition of the present invention contains kahweol palmitate and cafestol palmitate. The lower limit value of the total content [(X) + (Y)] of kahweol palmitate and cafestol palmitate in the chocolate composition of the present invention is 850 mg (850 mg/kg), preferably 1000 mg/kg, more preferably 1100 mg/kg, and still more preferably 1200 mg/kg per 1 kg of the chocolate composition. The upper limit value of the total content [(X) + (Y)] of kahweol palmitate and cafestol palmitate in the chocolate composition of the present invention is 6500 mg (6500 mg/kg), preferably 6000 mg/kg, more preferably 5800 mg/kg, and still more preferably 5600 mg/kg per 1 kg of the chocolate composition. Typically, a range of the total content [(X) + (Y)] of kahweol palmitate and cafestol palmitate in the chocolate composition of the present invention is from 850 to 6500 mg (from 850 to 6500 mg/kg), preferably from 1000 to 6000 mg/kg, more preferably from 1100 to 5800 mg/kg, and still more preferably from 1200 to 5600 mg/kg per 1 kg of the chocolate composition. When the total content of kahweol palmitate and cafestol palmitate is less than 850 mg/kg, the coffee flavor cannot be sufficiently imparted. When the total content of kahweol palmitate and cafestol palmitate is more than 6500 mg/kg, coffee-like bitterness is too strong.

The lower limit value of the content of kahweol palmitate in the chocolate composition of the present invention is not particularly limited, and is preferably 500 mg (500 mg/kg), more preferably 600 mg/kg, and still more preferably 760 mg/kg per 1 kg of the chocolate composition. The upper limit value of the content of kahweol palmitate in the chocolate composition of the present invention is not particularly limited, and is preferably 4000 mg (4000 mg/kg), more preferably 3700 mg/kg, and still more preferably 3400 mg/kg per 1 kg of the chocolate composition. Typically, the content range of kahweol palmitate in the chocolate composition of the present invention is not particularly limited, and is preferably from 500 to 4000 mg (from 500 to 4000 mg/kg), more preferably from 600 to 3700 mg/kg, and still more preferably from 760 to 3400 mg/kg per 1 kg of the chocolate composition.

The lower limit value of the content of cafestol palmitate in the chocolate composition of the present invention is not particularly limited, and is preferably 350 mg (350 mg/kg), more preferably 400 mg/kg, and still more preferably 440 mg/kg per 1 kg of the chocolate composition. The upper limit value of the content of cafestol palmitate in the chocolate composition of the present invention is not particularly limited, and is preferably 2500 mg (2500 mg/kg), more preferably 2300 mg/kg, and still more preferably 2200 mg/kg per 1 kg of the chocolate composition. Typically, the content range of cafestol palmitate in the chocolate composition of the present invention is not particularly limited, and is preferably from 350 to 2500 mg (from 350 to 2500 mg/kg), more preferably from 400 to 2300 mg/kg, and still more preferably from 440 to 2200 mg/kg per 1 kg of the chocolate composition.

In order to contain kahweol palmitate and cafestol palmitate in the chocolate composition to adjust the content of kahweol palmitate and the content of cafestol palmitate to predetermined ranges, for example, a raw material containing kahweol palmitate and cafestol palmitate may be used in the chocolate composition, and the type of raw material is not particularly limited. In order to contain kahweol palmitate and cafestol palmitate in the chocolate composition, isolated or synthesized kahweol palmitate and cafestol palmitate and the like can be used, and a combination thereof may be used. In the present invention, the content of kahweol palmitate and the content of cafestol palmitate in the roasted coffee beans may be measured in advance, and then the roasted coffee beans may be blended so that the content of kahweol palmitate and the content of cafestol palmitate in the chocolate composition become predetermined contents to adjust the content of kahweol palmitate and the content of cafestol palmitate in the chocolate composition. At that time, a plurality of varieties of roasted coffee beans and finely ground products thereof may be used in combination.

The content of kahweol palmitate and the content of cafestol palmitate can be quantified using a known method such as an LC-MS/MS method. For example, the content can be measured by the method described in Examples described later.

### 1-4. Ratio [(b)/(a)] of caffeine content (b) to total content (a) of kahweol palmitate and cafestol palmitate

In the chocolate composition of the present invention, the ratio of the caffeine content (b) to the total content (a) of kahweol palmitate and cafestol palmitate (caffeine content/total content of kahweol palmitate and cafestol palmitate [(b)/(a)]) is preferably 0.18 or less, more preferably 0.15 or less, and still more preferably 0.13 or less. The ratio [(b)/(a)] of the caffeine content (b) to the total content (a) of kahweol palmitate and cafestol palmitate in the chocolate composition of the present invention is preferably 0.01 or more, more preferably 0.02 or more, and still more preferably 0.03 or more. When the ratio [(b)/(a)] of the caffeine content (b) to the total content (a) of kahweol palmitate and cafestol palmitate is 0.18 or less, the coffee flavor can be further enhanced while suppressing the caffeine content. When the ratio [(b)/(a)] of the caffeine content (b) to the total content (a) of kahweol palmitate and cafestol palmitate is 0.01 or more, a good coffee flavor is obtained.

### 1-5. Finely ground product of roasted coffee beans

In the present specification, the "finely ground product of roasted coffee beans" refers to a product obtained by finely grinding roasted coffee beans. The chocolate composition of the present invention may be produced by adding a finely ground product of roasted coffee beans to a raw material, or may be produced by subjecting the raw material containing the roasted coffee beans to a finely grinding treatment. Here, the "roasted coffee beans" are green coffee beans subjected to heat treatment called roasting. The roasting chemically changes the components contained in the green coffee beans to produce a coffee flavor (strong fragrance or flavor).

In the present invention, as long as the caffeine content and the contents of kahweol palmitate and cafestol palmitate can be set within a predetermined range, the type of coffee beans to be used in the finely ground product of roasted coffee beans is not limited, and although any of arabica type, robusta type, liberica type, and the like can be used, the arabica type is one example of a preferred embodiment. In the present invention, a plurality of varieties of coffee beans can be used in combination.

The content of the finely ground product of roasted coffee beans in the chocolate composition of the present invention is not particularly limited, and is preferably from 4 to 38 mass%, from 6 to 35 mass%, from 7 to 32 mass%, and from 7.5 to 30 mass%, more preferably from 11 to 27 mass%, and still more preferably from 11 to 19 mass%.

In the present invention, a roasting method and roasting conditions of the coffee beans used for the finely ground product of roasted coffee beans are not particularly limited. For example, in a method such as a direct heat method, a hot air method, a semi-hot air method, a char-grill method, a far-infrared method, a microwave method or a superheated steam method, an apparatus such as a horizontal (lateral) drum type, a vertical (longitudinal) drum type, a vertically rotating bowl type, a fluidized bed type and a pressurization type may be used, and coffee beans may be finished at a degree of roast (light, cinnamon, medium, high, city, full-city, French, Italian) suited to the predetermined purpose depending on the type of beans. The roasting temperature is also not particularly limited, and a preferable roasting temperature is from 100 to 300°C, more preferably from 150 to 250°C, and particularly preferably from 170 to 220°C. In addition, the roasting time is not particularly limited, and is preferably from 5 to 30 minutes, more preferably from 10 to 25 minutes, and particularly preferably from 15 to 20 minutes.

In the present invention, the degree of roast is also not particularly limited, and coffee beans are roasted so that the degree of roast is preferably from 10 to 40, more preferably from 15 to 35, and particularly preferably from 16 to 32 in the L value measured by a color difference meter as an index. For the measurement of the degree of roast, ground beans are introduced into a cell and thoroughly tapped to measure the degree of roast by a spectral colorimeter. SE-2000 available from Nippon Denshoku Industries, Co., Ltd. and the like may be used as the spectral colorimeter.

The chocolate composition of the present invention can also include the finely ground product of roasted coffee beans produced by finely grinding the roasted coffee beans described above. The chocolate composition of the present invention may be produced by finely grinding a raw material containing roasted coffee beans. The caffeine content and the contents of kahweol palmitate and cafestol palmitate may be adjusted by blending the finely ground product of roasted coffee beans. The median diameter of the finely ground product of roasted coffee beans contained in the chocolate composition of the present invention is not particularly limited, and is preferably from 5 to 50 µm, more preferably from 5 to 40 µm, still more preferably from 6 to 30 µm, and particularly preferably from 7 to 20 µm. When the chocolate composition contains the finely ground product of roasted coffee beans having a median diameter exceeding 50 µm, a feeling of strangeness of texture such as mouth-feel and food texture may occur.

The method for the finely grinding treatment of the roasted coffee beans and the method for the finely grinding treatment when producing the chocolate composition are not particularly limited as long as the median diameter of the finely ground product of roasted coffee beans contained in the chocolate composition can be from 5 to 50 µm, and a known method can be used. For example, in the finely grinding treatment of the roasted coffee beans, a dry grinding method, a freeze grinding method, or the like can be used. In the finely grinding treatment in the production of the chocolate composition, a dry grinding method can be mainly used.

In a particle diameter, a large number of measurement results are generally represented as a distribution of existence ratios for each particle diameter, and this is referred to as a particle diameter distribution. The existence ratio is based on a volume, a number, or the like, and in the present specification, the existence ratio is represented by the existence ratio on a volume basis, and the existence ratio can be measured by a measuring device based on a laser diffraction/scattering method. An example of the measuring device is a Microtrac particle size distribution measuring device (available from Nikkiso Co., Ltd.). In the present specification, the particle diameter of the finely ground product of the roasted coffee beans is represented by a median diameter, and the median diameter is a 50% diameter of cumulative data of the particle diameter, and is a diameter in which when the powder is divided into two from a certain particle diameter, the larger side and the smaller side are equal in amount.

### 1-6. Other components

In addition to the above components, sweeteners (for example, glucose, fructose, galactose, sucrose (sugar), lactose, maltose, trehalose, oligosaccharides, sugar alcohols, non-carbohydrate natural sweeteners, and synthetic sweeteners), emulsifiers (for example, lecithin), oils and/or fats (for example, cocoa butter substitute fat), dairy products (for example, whole fat dry milk and non-fat dry milk), antioxidants, fragrances, preservatives, quality stabilizers, and the like can be appropriately blended in the chocolate composition of the present invention as long as the effects of the present invention are not impaired.

### 2. Method for producing chocolate composition

The present invention, in one aspect, is a method for producing a coffee-flavored chocolate composition, including adjusting the caffeine content to from 60 to 750 ppm, and adjusting the total content of kahweol palmitate and cafestol palmitate to from 850 to 6800 mg/kg. This makes it possible to obtain a coffee-flavored chocolate composition having an enhanced coffee flavor while reducing the caffeine content. That is, the present invention, in one aspect, is also a method for enhancing the coffee flavor while reducing the caffeine content in the coffee-flavored chocolate composition.

In the method for producing a chocolate composition, a target chocolate composition can be produced by producing roasted coffee beans and low-caffeine roasted coffee beans, measuring in advance the caffeine content and the contents of kahweol palmitate and cafestol palmitate in the roasted coffee beans, then blending the roasted coffee beans so that the caffeine content and the total content of kahweol palmitate and cafestol palmitate in the chocolate composition become predetermined contents. In one aspect, a target chocolate composition can also be obtained by blending roasted coffee beans and low-caffeine roasted coffee beans, then subjecting the mixture to a finely grinding treatment to produce a chocolate composition, and measuring the caffeine content and the contents of kahweol palmitate and cafestol palmitate in the composition. At that time, the finely ground product of the roasted coffee beans or the finely ground product of the low-caffeine roasted coffee beans may be blended to adjust the caffeine content, the content of kahweol palmitate, and the content of cafestol palmitate in the chocolate composition. A plurality of varieties of roasted coffee beans or low-caffeine roasted coffee beans from a plurality of origins may be blended to adjust the caffeine content, the content of kahweol palmitate, and the content of cafestol palmitate in the chocolate composition. Moreover, in addition to blending roasted coffee beans and low-caffeine roasted coffee beans, caffeine isolated from a natural product, artificially synthesized caffeine, or a combination thereof can be blended to adjust the amount of caffeine in the chocolate composition to a predetermined content. The content of kahweol palmitate and the content of cafestol palmitate can also be adjusted not only by blending the roasted coffee beans and the low-caffeine roasted coffee beans, but also by using kahweol palmitate and cafestol palmitate isolated from a natural product, the synthesized kahweol palmitate and cafestol palmitate, or a combination thereof. In the method for producing a chocolate composition, the content range of caffeine is as described in "1. Coffee-flavored chocolate composition". In addition, the content of kahweol palmitate, the content of cafestol palmitate, and the total amount and ratio thereof are also as described in "1. Coffee-flavored chocolate composition".

In the method for producing a chocolate composition, the caffeine content, the content of kahweol palmitate, and the content of cafestol palmitate may be adjusted by blending a finely ground product of roasted coffee beans having a median diameter of from 5 to 50 µm or a finely ground product of low-caffeine roasted coffee beans. The method for producing a chocolate composition may further include a step of roasting coffee beans and a step of finely grinding the roasted coffee beans. In one aspect, a chocolate composition containing a finely ground product of roasted coffee beans having a median diameter of from 5 to 50 µm can be obtained by blending the roasted coffee beans or the low-caffeine roasted coffee beans and then subjecting the mixture to the finely grinding treatment. The type of the roasted coffee beans, the roasting method, the finely grinding method, the particle diameter of the finely ground product, and the like are as described in "1. Chocolate composition".

The type of chocolate composition produced by the above method is as described in "1. Coffee-flavored chocolate composition", is not particularly limited, and is preferably a chocolate composition having a cocoa butter content of preferably less than 50 mass%, more preferably 45 mass% or less, and still more preferably 40 mass% or less. In an aspect, the chocolate composition produced by the method is preferably a white chocolate using cocoa butter without using cacao mass or cocoa.

### Examples

Hereinafter, the present invention will be described in more detail with reference to specific experimental examples, but the present invention is not limited to the following experimental examples.

### Experiment 1: Production of base blended coffee bean

Roasted coffee beans having three different degrees of roast were produced using a coffee roasting machine (TMR660, available from Petroncini) using green coffee beans (Brazilian, arabica type) as a raw material. The roasting conditions and the degree of roast (L value) of each roasted coffee bean are as follows.
(1) Light-roasted coffee beans: L value = 28; finished baking temperature 190°C; roasting time: 5 minutes
(2) Medium-roasted coffee beans: L value = 23; finished baking temperature 210°C; roasting time: 6 minutes 30 seconds
(3) Dark-roasted coffee beans: L value = 20; finished baking temperature 235°C; roasting time: 9 minutes

Each of the produced roasted coffee beans was mixed at the following blending ratio to obtain a base blend.

**[Table 1]**

| Coffee bean | L value | Blending ratio |
|---|---|---|
| Light-roasted | 28.0 | 50.00 |
| Medium-roasted | 23.0 | 25.00 |
| Dark-roasted | 20.0 | 25.00 |

| | | |
|---|---|---|
| (Average L value = 23.5) | | |

The base blend was ground to have a median diameter of 10 µm or less by a freeze grinding method described in JP 2015-73462 A using a freeze grinding system 100 (Linrex mill available from Liquid Gas Co., Ltd.). Specifically, a freeze-grinding step of directly freezing the washed roasted coffee beans by liquid nitrogen, and finely grinding the frozen coffee beans in an atmosphere maintained at from -110°C to -180°C until cell walls of the coffee beans were broken was executed to produce base blended coffee beans having a median diameter of 10 µm or less.

### Experiment 2: Production of low-caffeine coffee beans

Caffeine in coffee beans was reduced using a supercritical liquid carbon dioxide extraction method using green coffee beans (Colombian, arabica type) as a raw material. Specifically, the green coffee beans were humidified with steam, and supercritical carbon dioxide in which carbon dioxide was made to be a fluid having a density close to that of water that was neither a liquid nor a gas under the conditions of a temperature of 31°C and a superpressure (200 atm) was charged, and the supercritical carbon dioxide was circulated a plurality of times to extract caffeine from the green coffee beans. The low-caffeine coffee beans obtained were roasted to an L value = from 22.5 to 25 and medium-ground to obtain low-caffeine coffee beans.

### Experiment 3: Production of chocolate composition

Each chocolate composition as a sample was produced with the composition of Table 2 using the following raw materials.
- Base blended coffee beans: see Experiment 1
- Low-caffeine coffee beans: see Experiment 2
- Cocoa butter: available from Cargill, Incorporated
- Sugar: available from ITOCHU SUGAR CO., LTD.
- Lactose: available from Lacto Japan Co., Ltd.
- Lecithin: available from ADM

Sample 2 is a common existing chocolate (commercially available product) that does not contain kahweol palmitate and cafestol palmitate but contains caffeine.

**[Table 2]**

| Sample No. | (mass%) | Coffee bean | | Cocoa butter (mass%) | Sugar (mass%) | Lactose (mass%) | Lecithin (mass%) | Total (mass%) | Degree of sweetness |
|---|---|---|---|---|---|---|---|---|---|
| | | Base blended bean (mass%) | Low-caffeine bean (mass%) | | | | | | |
| 1 | 15.0 | 15.00 | 0.00 | 36.0 | 15.0 | 33.6 | 0.4 | 100.0 | 20.4 |
| 2 | (The raw material composition and the degree of sweetness are unknown because of commercially available product) | | | | | | | | |
| 3 | 3.5 | 0.35 | 3.15 | 36.0 | 13.0 | 47.1 | 0.4 | 100.0 | 20.5 |
| 4 | 3.5 | 0.00 | 3.50 | 36.0 | 13.0 | 47.1 | 0.4 | 100.0 | 20.5 |
| 5 | 7.0 | 0.70 | 6.30 | 36.0 | 14.0 | 42.6 | 0.4 | 100.0 | 20.8 |
| 6 | 7.0 | 0.00 | 7.00 | 36.0 | 14.0 | 42.6 | 0.4 | 100.0 | 20.8 |
| 7 | 15.0 | 1.50 | 13.50 | 36.0 | 15.0 | 33.6 | 0.4 | 100.0 | 20.4 |
| 8 | 15.0 | 0.00 | 15.00 | 36.0 | 15.0 | 33.6 | 0.4 | 100.0 | 20.4 |
| 9 | 30.0 | 3.00 | 27.00 | 36.0 | 18.0 | 15.6 | 0.4 | 100.0 | 20.5 |
| 10 | 30.0 | 0.00 | 30.00 | 36.0 | 18.0 | 15.6 | 0.4 | 100.0 | 20.5 |
| 11 | 40.0 | 4.00 | 36.00 | 36.0 | 20.0 | 3.6 | 0.4 | 100.0 | 20.6 |
| 12 | 40.0 | 0.00 | 40.00 | 36.0 | 20.0 | 3.6 | 0.4 | 100.0 | 20.6 |

A chocolate dough obtained by blending each raw material with the above composition was placed in a thermostatic chamber set at 50°C, and mixed with a stirrer for 30 minutes. Thereafter, the mixture was subjected to temperature adjustment (tempering) at 32°C for 10 minutes, filled in a container having a longitudinal width of 40 mm, a lateral width of 30 mm, and a thickness of 10 mm, molded, and allowed to stand in a dark place for 16 hours to obtain chocolate.

Thereafter, the caffeine content, the content of kahweol palmitate, and the content of cafestol palmitate in the obtained sample chocolate were each measured.

Firstly, the caffeine content in the sample chocolate was measured by a known method using high performance liquid chromatography (HPLC) after stirring 5 g of each sample with 500 mL of hot water for 10 minutes, then measuring the volume, and filtering with a membrane filter DISMIC-25CS (pore diameter 0.45 µm, Tokyo Filter Paper Co., Ltd.).

As for the content of kahweol palmitate and the content of cafestol palmitate in the sample chocolate, 0.2 g of each sample added with 800 µL of Milli-Q water was used as a sample, and kahweol palmitate and cafestol palmitate were extracted using the Folch method. Using the obtained sample for GC-MS/MS measurement, the content of kahweol palmitate and the content of cafestol palmitate in each sample were measured by the method described later.

### <Analytical conditions of kahweol palmitate and cafestol palmitate (LC-MS/MS)>

### [Used model]

- MS: 4000Q TRAP (available from AB Sciex Pte. Ltd.)
- LC: UFLC XR (available from Shimadzu Corporation)

### [LC conditions]

- Mobile phase: (A) 0.1% formic acid aqueous solution, (B) ethanol
- Flow rate: 0.35 ml/min
- Gradient conditions: 4 min. (B: 87%) - 4.05 min. (100%)
- Column: Phenomenex Kinetexv C18 1.3 µm 2.1 × 50 mm
- Column temperature: 45°C
- Introduction amount: 2 µl

### [MS conditions]

- Full MS, Runtime 1-5min. Positive

### [Quantitative method]

- Standard addition method
- kahweol palmitate: 535.410 → 279.170 (Q1 → Q3)
- Cafestol palmitate: 567.440 → 281.190 (Q1 → Q3)
- DP: 95 V
- EP: 10 V
- CE: 21 V
- CXP: 12 V

A kahweol palmitate standard product (available from Santa Cruz Biotechnology, Inc.) and a cafestol palmitate standard product (available from Santa Cruz Biotechnology, Inc.) were used under the above conditions.

Table 3 shows the contents of caffeine, kahweol palmitate, and cafestol palmitate, and the total content of kahweol palmitate and cafestol palmitate in each sample chocolate.

**[Table 3]**

| Sample No. | Caffeine (ppm) | Kahweol palmitate (mg/kg) | Cafestol palmitate (mg/kg) | Kahweol palmitate + cafestol palmitate (mg/kg) |
|---|---|---|---|---|
| 1 | 2200 | 1900 | 1600 | 3500 |
| 2 | 660 | 0 | 0 | 0 |
| 3 | 130 | 480 | 310 | 790 |
| 4 | 50 | 400 | 240 | 640 |
| 5 | 180 | 850 | 550 | 1400 |
| 6 | 70 | 780 | 460 | 1240 |
| 7 | 310 | 1700 | 1100 | 2800 |
| 8 | 100 | 1700 | 1000 | 2700 |
| 9 | 610 | 3400 | 2200 | 5600 |
| 10 | 180 | 3300 | 2000 | 5300 |
| 11 | 760 | 4600 | 3000 | 7600 |
| 12 | 240 | 4300 | 2600 | 6900 |

Next, sensory evaluation was performed by expert panelists (six panelists) for each sample chocolate produced. In the sensory evaluation, the expert panelists ate 14 g of each sample chocolate, and evaluated the coffee-like bitterness, the body feeling, roasty aroma, and the comprehensive evaluation (tastiness as a coffee-flavored chocolate composition) in five stages.

### <Evaluation criteria: coffee-like bitterness >

5 points: bitterness is too strong and slightly unsuitable for eating
4 points: coffee-like bitterness is strongly perceived
3 points: coffee-like bitterness is perceived
2 points: coffee-like bitterness is slightly perceived
1 point: coffee-like bitterness is not perceived
* A sample with from 2 to 4.5 points was evaluated as preferable for the "coffee-like bitterness".

### <Evaluation criteria: body feeling>

5 points: strongly perceived
4 points: perceived
3 points: slightly perceived
2 points: not perceived much
1 point: not perceived
* A sample with 3 or more points was evaluated as preferable for the "body feeling".

### <Evaluation criteria: roasty aroma>

5 points: strongly perceived
4 points: perceived
3 points: slightly perceived
2 points: not perceived much
1 point: not perceived
* A sample with 3 or more points was evaluated as preferable for the "roasty aroma".

### <Evaluation criteria: comprehensive evaluation (tastiness as coffee-flavored chocolate composition)>

5 points: very good
4 points: good
3 points: slightly good
2 points: slightly poor
1 point: not good
* A sample with 4 or more points was evaluated as preferable for the "comprehensive evaluation (tastiness as coffee-flavored chocolate composition)".

Tables 4 to 7 indicate results of the evaluation. As shown in Tables 4 to 7, in Sample 1 containing caffeine and containing kahweol palmitate and cafestol palmitate, all the evaluation items had good results. In Sample 2 containing caffeine but not containing kahweol palmitate and cafestol palmitate, the coffee-like bitterness was not perceived, and the results showed that the tastiness (comprehensive evaluation) as the coffee-flavored chocolate composition was low. In addition, Samples 3 to 4 having a low caffeine content and also having a low content of kahweol palmitate and cafestol palmitate had low evaluation scores of the "coffee-like bitterness" and the "roasty aroma", which particularly strongly contributed to the coffee flavor, and the comprehensive evaluation was also not good. However, even when the caffeine content was low, by setting the total content of kahweol palmitate and cafestol palmitate within the scope of the present invention, it became clear that all the evaluation items had good results, and a chocolate composition highly evaluated for the tastiness as the coffee-flavored chocolate composition was obtained (Samples 5 to 10).

As described above, it was revealed that, even when the caffeine content in the chocolate composition was reduced, by adjusting the total content of kahweol palmitate and the content of cafestol palmitate to a specific range, a delicious chocolate composition having an enhanced coffee flavor was obtained while the caffeine content was reduced.

**[Table 4]**

| Coffee-like bitterness | | | | | | | |
|---|---|---|---|---|---|---|---|
| Sample No. | Panelist No. | | | | | | Average |
| | 1 | 2 | 3 | 4 | 5 | 6 | |
| 1 | 4 | 4 | 3 | 4 | 4 | 4 | 3.8 |
| 2 | 1 | 1 | 1 | 1 | 1 | 1 | 1.0 |
| 3 | 1 | 2 | 1 | 1 | 1 | 2 | 1.3 |
| 4 | 1 | 2 | 1 | 2 | 1 | 2 | 1.5 |
| 5 | 3 | 2 | 3 | 2 | 2 | 2 | 2.3 |
| 6 | 2 | 2 | 3 | 3 | 3 | 2 | 2.5 |
| 7 | 3 | 3 | 4 | 4 | 4 | 3 | 3.5 |
| 8 | 4 | 4 | 4 | 4 | 3 | 3 | 3.7 |
| 9 | 4 | 4 | 4 | 4 | 4 | 4 | 4.0 |
| 10 | 5 | 4 | 4 | 4 | 4 | 4 | 4.2 |
| 11 | 5 | 5 | 5 | 5 | 4 | 4 | 4.7 |
| 12 | 5 | 5 | 5 | 5 | 5 | 4 | 4.8 |

**[Table 5]**

| Body feeling | | | | | | | |
|---|---|---|---|---|---|---|---|
| Sample No. | Panelist No. | | | | | | Average |
| | 1 | 2 | 3 | 4 | 5 | 6 | |
| 1 | 3 | 3 | 4 | 4 | 3 | 4 | 3.5 |
| 2 | 2 | 4 | 3 | 4 | 4 | 4 | 3.5 |
| 3 | 3 | 3 | 2 | 2 | 2 | 4 | 2.7 |
| 4 | 3 | 3 | 3 | 4 | 2 | 3 | 3.0 |
| 5 | 3 | 3 | 3 | 3 | 3 | 3 | 3.0 |
| 6 | 3 | 3 | 3 | 3 | 3 | 4 | 3.2 |
| 7 | 3 | 3 | 4 | 3 | 3 | 4 | 3.3 |
| 8 | 4 | 4 | 4 | 3 | 3 | 4 | 3.7 |
| 9 | 4 | 4 | 4 | 4 | 4 | 4 | 4.0 |
| 10 | 4 | 4 | 4 | 4 | 4 | 4 | 4.0 |
| 11 | 4 | 5 | 4 | 4 | 4 | 5 | 4.3 |
| 12 | 4 | 5 | 4 | 4 | 4 | 5 | 4.3 |

**[Table 6]**

| Roasty aroma | | | | | | | |
|---|---|---|---|---|---|---|---|
| Sample No. | Panelist No. | | | | | | Average |
| | 1 | 2 | 3 | 4 | 5 | 6 | |
| 1 | 3 | 4 | 4 | 3 | 3 | 4 | 3.5 |
| 2 | 3 | 3 | 3 | 2 | 4 | 3 | 3.0 |
| 3 | 1 | 2 | 2 | 1 | 1 | 2 | 1.5 |
| 4 | 2 | 2 | 2 | 1 | 1 | 2 | 1.7 |
| 5 | 3 | 3 | 3 | 4 | 3 | 3 | 3.2 |
| 6 | 3 | 3 | 3 | 4 | 3 | 3 | 3.2 |
| 7 | 3 | 3 | 4 | 4 | 4 | 3 | 3.5 |
| 8 | 4 | 3 | 3 | 3 | 4 | 4 | 3.5 |
| 9 | 4 | 5 | 5 | 4 | 4 | 4 | 4.3 |
| 10 | 4 | 5 | 5 | 4 | 5 | 4 | 4.5 |
| 11 | 5 | 5 | 4 | 5 | 5 | 5 | 4.8 |
| 12 | 5 | 5 | 4 | 5 | 5 | 5 | 4.8 |

**[Table 7]**

| Comprehensive evaluation (tastiness as coffee-flavored chocolate composition) | | | | | | | |
|---|---|---|---|---|---|---|---|
| Sample No. | Panelist No. | | | | | | Average |
| | 1 | 2 | 3 | 4 | 5 | 6 | |
| 1 | 4 | 5 | 4 | 5 | 4 | 4 | 4.3 |
| 2 | 1 | 1 | 1 | 1 | 1 | 1 | 1.0 |
| 3 | 1 | 1 | 1 | 2 | 2 | 2 | 1.5 |
| 4 | 1 | 2 | 1 | 1 | 2 | 2 | 1.5 |
| 5 | 4 | 4 | 4 | 4 | 4 | 4 | 4.0 |
| 6 | 5 | 4 | 4 | 4 | 5 | 4 | 4.3 |
| 7 | 5 | 5 | 5 | 4 | 5 | 5 | 4.8 |
| 8 | 5 | 5 | 5 | 4 | 5 | 5 | 4.8 |
| 9 | 4 | 5 | 4 | 3 | 4 | 4 | 4.0 |
| 10 | 4 | 5 | 4 | 4 | 5 | 4 | 4.3 |
| 11 | 3 | 4 | 3 | 4 | 3 | 2 | 3.2 |
| 12 | 3 | 3 | 3 | 4 | 3 | 3 | 3.2 |

### Industrial Applicability

The present invention relates to a new means for providing a coffee-flavored chocolate composition having an enhanced coffee flavor while reducing the caffeine content, and therefore has high industrial applicability.

## Claims

1. A coffee-flavored chocolate composition, wherein
a content of caffeine is from 60 to 750 ppm, and
a total content of kahweol palmitate and cafestol palmitate is from 850 to 6800 mg/kg.

2. The chocolate composition according to claim 1, wherein a ratio of the content (b: ppm) of caffeine to the total content (a: mg/kg) of kahweol palmitate and cafestol palmitate (content of caffeine/total content of kahweol palmitate and cafestol palmitate (b/a)) is 0.18 or less.

3. The chocolate composition according to claim 1 or 2, wherein the content of caffeine is from 65 to 650 ppm.

4. The chocolate composition according to any one of claims 1 to 3, wherein the total content of kahweol palmitate and cafestol palmitate is from 1000 to 6000 mg/kg.

5. The chocolate composition according to any one of claims 1 to 4, wherein the content of kahweol palmitate is from 500 to 4000 mg/kg.

6. The chocolate composition according to any one of claims 1 to 4, wherein the content of cafestol palmitate is from 350 to 2500 mg/kg.

7. The chocolate composition according to any one of claims 1 to 6, comprising a finely ground product of roasted coffee beans having a median diameter of from 5 to 50 µm.

8. The chocolate composition according to claim 7, wherein a content of the finely ground product of roasted coffee beans in the chocolate composition is from 4 to 38 mass%.

9. The chocolate composition according to any one of claims 1 to 8, wherein the coffee beans contain arabica coffee beans.

10. The chocolate composition according to any one of claims 1 to 9, wherein the coffee beans have a degree of roast of from L16 to L32.

11. The chocolate composition according to any one of claims 1 to 10, wherein a content of cacao mass is less than 50 mass%.

12. The chocolate composition according to any one of claims 1 to 11, wherein the chocolate composition is a white chocolate.

13. A method for producing a coffee-flavored chocolate composition, the method comprising:
adjusting a content of caffeine to from 60 to 750 ppm; and
adjusting a total content of kahweol palmitate and cafestol palmitate to from 850 to 6800 mg/kg.
